# EUROPÄISCHE PATENTSCHRIFT

(11) **EP 2 311 684 B1**
(45) Veröffentlichungstag und Bekanntmachung des Hinweises auf die Patenterteilung: **30.07.2014**
(21) Anmeldenummer: 09012946.1
(22) Anmeldetag: 13.10.2009
(51) Int. Cl.: B60L 5/19

(54) **Stromabnehmer**
Current collector
Prise de courant

(43) Veröffentlichungstag der Anmeldung: 20.04.2011
(73) Patentinhaber: Stemmann-Technik GmbH, 48465 Schüttorf (DE); Bombardier Transportation GmbH, 10785 Berlin (DE)
(72) Erfinder: Hengstermann, Thomas, 48432 Rheine (DE); Ütrecht, Werner, 48465 Schüttorf (DE)
(74) Vertreter: Ksoll, Peter

(56) Entgegenhaltungen:
- DE-U1- 9 304 251
- DE-U1- 29 601 731
- FR-A1- 2 477 989

## Beschreibung

Die Erfindung betrifft einen Stromabnehmer für ein Schienenfahrzeug zur Kontaktierung mit einem Fahrdraht einer Oberleitung.

Derartige Stromabnehmer dienen zur Übertragung elektrischer Energie von einer fest montierten, Strom führenden Oberleitung zu elektrischen Komponenten des angetriebenen Fahrzeugs. Solche Stromabnehmer finden sich nicht nur an Schienenfahrzeugen, sondern auch an Oberleitungsbussen. Bei den Stromabnehmern sind so genannte Scheren- oder Pantografenstromabnehmer und Einholmstromabnehmer zu unterscheiden. Bei moderneren Schienenfahrzeugen kommt auf Grund seiner leichteren Bauweise in der Regel der Einholmstromabnehmer zum Einsatz.

Die Höhenverstellung der Stromabnehmer erfolgt elektrisch, hydraulisch oder pneumatisch gegenüber dem fahrzeugseitigen Grundrahmen des Stromabnehmers. Auf dem Grundrahmen ist ein Stangenwerk, bestehend aus Unterarm, Lenkerstange und Oberarm, und an diesem eine Stromabnehmerwippe mit einer Schleifleistenanordnung zur Kontaktierung mit dem Fahrdraht der Oberleitung angeordnet. In Abhängigkeit von der Spannung und den zu übertragenden Stromstärken können eine oder mehrere Schleifleisten vorgesehen sein.

Ein wesentliches Element der Stromabnehmerwippe ist eine quer zur Fahrtrichtung verlaufende Bügelanordnung, die endseitig Auflaufhörner aufweist. Diese sind nach unten, d.h. vom Fahrdraht weg und zum Schienenfahrzeug hin, gebogen. Mittels der Auflaufhörner wird verhindert, dass sich der Stromabnehmer an der Oberleitung verhakt, wenn die Oberleitung durch seitliche Auslenkung den Schleifleistenbereich verlassen sollte.

Auf Grund unterschiedlicher Stromübertragungssysteme sind auch unterschiedliche Breiten der Stromabnehmerwippen erforderlich. In Frankreich beträgt die erforderliche Breite beispielsweise 1.450 mm, wohingegen in Deutschland eine Wippenbreite von 1.950 mm verlangt wird. Es gibt auch weitere Standards mit Breiten von 1.600 und 1.800 mm. Im grenzüberschreitenden Verkehr waren Schienenfahrzeuge daher mit unterschiedlichen Stromabnehmern für die jeweiligen Stromübertragungssysteme auszustatten.

Die DE 199 14 566 A1 schlägt aus diesem Grund einen Stromabnehmer für Mehrsystemschienenfahrzeuge vor, bei welchen zwei separate, in Längsrichtung des Fahrzeugs voneinander beabstandete und quer zu ihm verlaufende Bügel mit je einem seitlichen Auflaufhorn an einer Wippe angeordnet sind, wobei die beiden Auflaufhörner zu entgegengesetzten Seiten des Fahrzeugs weisen. Die Bügel und damit die beiden Auflaufhörner sind mittels je einer hydraulischen oder pneumatischen Stelleinrichtung gegensätzlich zueinander quer zur Fahrtrichtung verschiebbar. Zusätzlich sind zwei in Längsrichtung des Fahrzeugs zueinander beabstandete, in der Wippe angeordnete Schleifleisten durch je eine weitere hydraulische oder pneumatische Stelleinrichtung gegensätzlich zueinander quer zur Fahrtrichtung verschiebbar. Auf diese Weise erfolgt die Anpassung an verschiedene Breiten der Stromübertragungssysteme. Es wird als nachteilig angesehen, dass mehrere quer zur Längsrichtung des Fahrzeugs im Abstand zueinander verlaufende Bügel vorgesehen sind, durch welche die Stromabnehmerwippe schwerer wird, wobei das zusätzliche Gewicht auch auf die erforderlichen zusätzlichen pneumatischen oder hydraulischen Stelleinrichtungen zurückzuführen ist.

Zum Stand der Technik ist die DE 93 04 251 U1 zu nennen, betreffend einen Stromabnehmer für ein gleisgebundenes Fahrzeug, bei welchem die Wippe zumindest ein feststehendes Schleifstück sowie ein zu diesen verstellbares Schleifstück mit Schleifstückabschnitten sowie endseitigen Auflaufhörnern umfasst. Die Schleifstückabschnitte können auseinander gefahren werden, um die Arbeitsbreite des Stromabnehmers zu vergrößern.

Aus der FR 2 477 989 A1 ist ebenfalls ein Stromabnehmer mit einer in der Breite verstellbaren Wippe bekannt. Die Breite des Schleifbügels des Stromabnehmers ist derart selbsttätig veränderbar, dass bei niedrig eingefahrenem Stromabnehmer der Schleifbügel schmal und bei hohem Stromabnehmer breit ist.

Schließlich ist noch die DE 296 017 31 U1 zum Stand der Technik zu nennen, welche bei einem Stromabnehmer vorschlägt, dass die beiden gegenüberliegenden Endhörner der Schleifleiste in ihrem Abstand zueinander und/oder die Schleifleisten in ihrer Länge einstellbar sind.

Der Erfindung liegt hiervon ausgehend die Aufgabe zu Grunde, einen breitenverstellbaren Stromabnehmer in kompakterer Bauweise aufzuzeigen.

Diese Aufgabe ist bei einem Stromabnehmer mit den Merkmalen des Patentanspruchs 1 gelöst.

Die Unteransprüche betreffen vorteilhafte Weiterbildungen des Erfindungsgedankens.

Der erfindungsgemäße Stromabnehmer umfasst eine in ihrer Breite veränderliche Stromabnehmerwippe mit wenigstens einer Schleifleiste und einer Bügelanordnung. Die Bügelanordnung umfasst einen Bügel mit Auflaufhörnern an seinen Enden. Die Auflaufhörner sind mittels einer Stelleinrichtung in entgegengesetzte Richtungen und quer zur Fahrtrichtung verschiebbar. Die Stelleinrichtung wird von wenigstens einer als Differenzialkolben ausgeführten, doppelt wirkenden Kolben-Zylinder-Einheit oder wenigstens einer elektromechanischen Antriebseinheit gebildet. Der Vorteil dieser Anordnung ist darin zu sehen, dass die beiden Auflaufhörner entlang einer gemeinsamen Achse, d.h. entlang des gemeinsamen Bügels, in zueinander entgegengesetzte Richtungen verschiebbar sind. Das ermöglicht eine kompaktere und damit auch leichtere Bauweise des Stromabnehmers. Ein solcher Stromabnehmer ist für unterschiedlich breite Stromübertragungssysteme einsetzbar, indem die Stelleinrichtung die Auflaufhörner verlagert und somit den Stromabnehmer an das jeweilige Stromübertragungssystem anpasst. Je nach Ausgestaltung der Kolben-Zylinder-Einheiten ist eine Anpassung an mindestens zwei verschieden breite Stromübertragungssysteme möglich.

Der erfindungsgemäße Stromabnehmer ist insbesondere mit einer Stelleinrichtung versehen, die von wenigstens einer als Differenzialkolben ausgeführten, doppelt wirkenden Kolben-Zylinder-Einheit gebildet wird. Diese wird mittels Fluiddruck angetrieben. Es kann sich um einen hydraulischen oder pneumatischen Druck handeln. Die aus dem Fluiddruck resultierende Kraft dient sowohl zum Ausfahren als auch zum Einfahren der Auflaufhörner. Zusätzliche Rückstellmittel sind prinzipiell nicht erforderlich. Es ist auch denkbar z.B. pneumatische Motoren mit ein- oder beidseitig wirkender Spindel als Stelleinrichtungen vorzusehen.

Es gibt eine Reihe von Möglichkeiten, wie derartige Kolben-Zylinder-Einheiten angesteuert oder auch angeordnet werden. Denkbar ist beispielsweise, dass jedem Auflaufhorn eine eigene Kolben-Zylinder-Einheit oder auch eine elektromechanische Antriebseinheit zugeordnet ist. Dies ermöglicht eine individuelle Betätigung der einzelnen Auflaufhörner. Generell wird angestrebt, dass sich beide Auflaufhörner synchron von der einen in die andere Betriebsstellung verlagern. Es ist im Rahmen der Erfindung daher auch möglich, dass die Verstellung der Auflaufhörner mittels einer in beiden Auflaufhörnern gemeinsamen Stelleinrichtung erfolgt. Eine solche gemeinsame Stelleinrichtung kann beispielsweise auch in Form eines Gewindetriebs ausgeführt sein. Beispielsweise kann eine angetriebene Gewindespindel dem Bügel zugeordnet sein, während mit der Gewindespindel in Eingriff stehende Spindelmuttern den Auflaufhörnern zugeordnet sind und auf Grund entgegengesetzter Gewindesteigungen in entgegengesetzte Richtungen verlagert werden, wenn sich die Gewindespindel dreht. Der Antrieb kann durch einen pneumatischen Motor erfolgen. Die Gewindespindel kann ein- oder beidseitig wirkend ausgeführt sein.

Wenn besonders große Hubwege oder auch eine Anpassung an mehr als zwei unterschiedliche Breiten der Stromabnehmersysteme gewünscht wird, ist es denkbar, mehrere Kolben-Zylinder-Einheiten in einer Reihenschaltung anzuordnen. Beispielsweise ist es denkbar, einem Auflaufhorn eine äußere Kolben-Zylinder-Einheit zuzuordnen und eine innere, d.h. im größeren Abstand zum Auflaufhorn liegende, Kolben-Zylinder-Einheit zuzuordnen. Wenn eine der Kolben-Zylinder-Einheiten druckbeaufschlagt wird, fährt ein Kolben, der mit einer Kolbenstange verbunden ist, aus und das Auflaufhorn wird in eine erste Betriebsstellung verlagert. Wird auch die zweite Kolben-Zylinder-Einheit druckbeaufschlagt, fährt das Auflaufhorn noch weiter aus und kann in eine zweite Betriebsstellung verlagert werden. Bei unterschiedlich langen Hubwegen ist auch noch eine weitere Betriebsstellung möglich, je nachdem, ob die Kolben-Zylinder-Einheit mit dem längeren oder diejenige mit dem kürzeren Hubweg zuerst druckbeaufschlagt wird.

In vorteilhafter Weiterbildung sind Arretierungsmittel vorgesehen, mittels welcher die Auflaufhörner in einer ausgefahrenen und/oder einer eingefahrenen Betriebsstellung gegenüber dem Bügel festsetzbar sind. Die Arretierungsmittel können elektrisch, magnetisch oder auch fluidisch betätigt sein. Die Arretierungsmittel können unter dem Einfluss eines Rückstellmittels, beispielsweise in Form einer Federkraft, stehen, durch welche die Arretierungsmittel grundsätzlich in einer Arretierungsposition gehalten werden. Nur wenn die Arretierungsmittel gelöst werden sollen, ist eine Einflussnahme über geeignete Stellmittel, die elektrisch, magnetisch oder fluidisch angetrieben werden, erforderlich. Wenn erforderlich lassen sich durch die Arretierungsmittel zusätzliche Betriebsstellungen ergänzen.

Die Verwendung von Arretierungsmitteln hat auch den Vorteil, dass die Kolben-Zylinder-Einheit bei in einer ausgefahrenen und/oder eingefahrenen Betriebsstellung festgesetzten Auflaufhömem druckfrei geschaltet sein kann. Es ist somit keineswegs erforderlich, dass die Kolben-Zylinder-Einheiten ständig mit Druck beaufschlagt sein müssen. Prinzipiell ist dies nur während der Verlagerung der Auflaufhörner notwendig.

Es ist möglich, die Arretierungsmittel aus Sicherheitsgründen redundant vorzusehen oder auch verschiedene Arretierungsmittel vorzusehen, um sicherzustellen, dass die Auflaufhörner ihre vorgesehene Betriebsstellung nicht bei Versagen beispielsweise eines elektrischen, magnetischen oder fluidischen Systems verändern können, falls eines dieser Systeme ausfallen sollte.

Im Rahmen der Erfindung ist die Stelleinheit außerhalb der Bügelanordnung angeordnet. Prinzipiell kann die Stelleinheit im Bereich der Stromabnehmerwippe angeordnet sein, d.h. zusammen mit der Wippe angehoben oder abgesenkt werden. Denkbar ist es aber auch, die Stelleinheit am Grundrahmen des Stromabnehmers zu platzieren, so dass diese nur dann mit den Auflaufhömem in einem Wirkzusammenhang steht, wenn der Stromabnehmer abgesenkt ist. Bei dieser Konfiguration sind die Auflaufhörner folglich in der angehobenen Position nicht verstellbar. Daher ist es notwendig, Arretierungsmittel vorzusehen, durch welche die Betriebsstellung der Auflaufhörner gesichert ist. Wenn die Stromabnehmerwippe abgesenkt wird, können die Auflaufhörner mit geeigneten Koppelmitteln der Stelleinrichtung lösbar in Eingriff gelangen. Die Stelleinrichtung selbst kann wiederum hydraulisch, pneumatisch oder elektromechanisch ausgeführt sein und steht mit den Auflaufhömem nur in abgesenkter Stellung in Kontakt.

Es ist denkbar, dass die die Auflaufhörner in der abgesenkten Stellung nur dann in Kontakt mit den Koppelmitteln kommen, wenn die Auflaufhörner verlagert werden sollen. Hierzu können die Koppelmittel selbst in einer Weise verlagert werden, dass sie nach dem Verstellen der Auflaufhörner wieder in eine Grundstellung gebracht werden, in welcher kein Kontakt zu den Auflaufhörnern besteht. Zum Beispiel könnten die Koppelmittel quer zur Stellrichtung der Auflaufhörner und gleichzeitig quer zur Hubrichtung des Stromabnehmers verlagert werden.

Es ist denkbar, dass die Stelleinrichtung und/oder die Koppelmittel gegenüber dem Stromabnehmer elektrisch isoliert ausgeführt sind.

Der erfindungsgemäße Stromabnehmer ist vorzugsweise mit Mitteln zur Signalisierung der Betriebsstellung versehen. Die Signalerzeugung kann optisch, z.B. durch Lichtschranken, erfolgen, aber auch induktiv, magnetisch oder mechanisch oder durch mechanisch betätigte Ventile (z.B. Grenztaster). Auf diese Weise kann die Stellung der Auflaufhörner an die Fahrzeugsteuerung übermittelt werden.

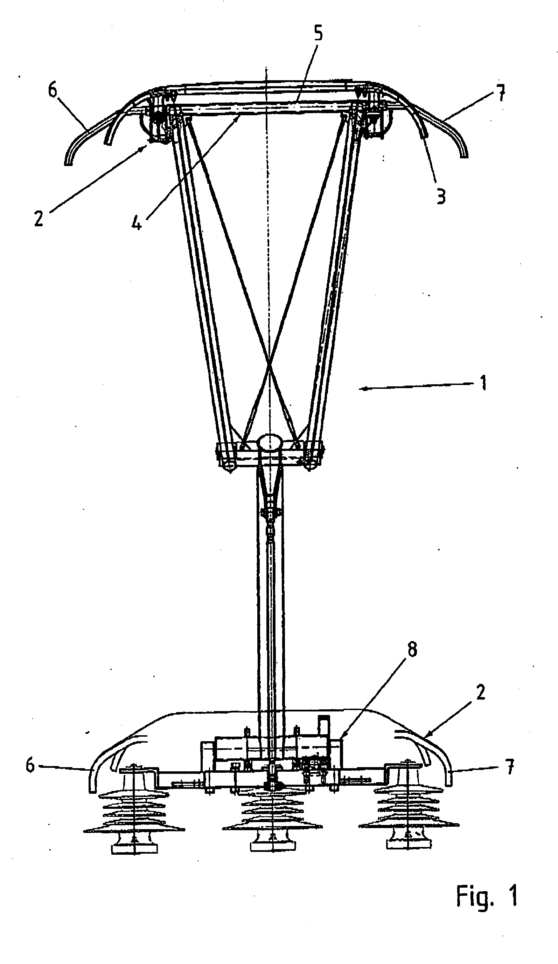

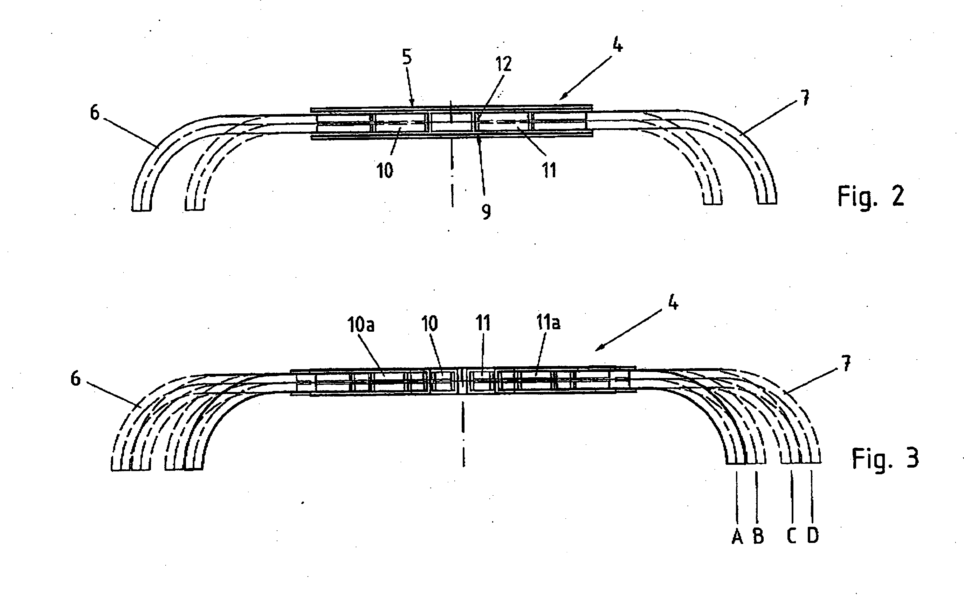

Die Erfindung wird nachfolgend anhand der in den Figuren 1 bis 8 schematisch dargestellten Ausführungsbeispiele näher erläutert, wobei die Figuren 2 bis 6 lediglich zur Illustration des Erfindungsgedankens dienen und nicht Ausführungsformen der Erfindung sind, für die Schutz beansprucht wird.

Es zeigt:
- Figur 1: einen Stromabnehmer für ein Schienenfahrzeug in der ausgefahrenen Position in Frontansicht;
- Figur 2: eine erste Ausführungsform einer Bügelanordnung eines Stromabnehmers mit doppelt wirkender Kolben-Zylinder-Einheit ohne Rückstellfeder;
- Figur 3: eine weitere Ausführungsform einer Bügelanordnung mit hintereinander geschalteten Kolben-Zylinder-Einheiten;
- Figuren 4a bis 4d: vier unterschiedliche Betriebsstellungen ein- und derselben Bügelanordnung bei unterschiedlich betätigten Kolben-Zylinder-Einheiten;
- Figur 5: eine Bügelanordnung mit einer Arretierung;
- Figur 6: eine Bügelanordnung mit einer Arretierung, wobei für das linke und rechte Auflaufhorn jeweils getrennt betätigbare Stelleinrichtungen vorgesehen sind;
- Figur 7: eine Bügelanordnung, bei welcher die Auflaufhörner in Wirkzusammenhang mit Koppelmitteln einer Stelleinheit stehen und
- Figur 8: die Bügelanordnung in gegenüber der Stelleinheit angehobener Position.

Figur 1 zeigt einen Stromabnehmer für ein nicht näher dargestelltes Schienenfahrzeug. Der Stromabnehmer 1 dient zur Kontaktierung eines Fahrdrahts einer Oberleitung. Der Stromabnehmer 1 ist ein Einholmstromabnehmer, der an seinem oberen Ende eine Stromabnehmerwippe 2 mit einer Schleifleiste 3 und einer Bügelanordnung 4 aufweist. Bei dieser Ausführungsform sind zwei Schleifleisten 3 vorgesehen, wobei sich zwischen den beiden Schleifleisten 3 die Bügelanordnung 4 befindet. Die Bügelanordnung 4 umfasst einen Mittelteil, der nachfolgend als Bügel 5 bezeichnet wird sowie endseitige Auflaufhörner 6, 7.

Figur 1 lässt darüber hinaus erkennen, wo sich die Stromabnehmerwippe 2 in der abgesenkten Position befindet. Die Auflaufhörner 6, 7 sowie die Schleifleiste 3 sind ansatzweise in der Nähe des fahrzeugseitigen Grundrahmens 8. Das Gestänge des Stromabnehmers 1 umfasst in diesem Ausführungsbeispiel einen Oberarm mit zwei Holmen, einer Lenkerstange und einen Unterarm mit einem Holm. Bei der vorliegenden Erfindung kommt es maßgeblich auf die Konfiguration der Bügelanordnung 4 an. Die nachfolgenden Figuren beziehen sich somit auf Bügelanordnungen, wie sie beispielsweise bei einem in Figur 1 dargestellten Stromabnehmer 1 zum Einsatz kommen können.

Figur 2 zeigt eine Ausführungsform einer Bügelanordnung 4 mit zwei endseitigen Auflaufhörnern 6, 7, die in entgegengesetzte Richtungen und quer zur Fahrtrichtung verschiebbar sind. Hierzu ist eine in den Mittelteil der Bügelanordnung 4, d.h. in den Bügel 5, eingegliederte Stelleinrichtung 9 vorgesehen. Die Stelleinrichtung 9 besteht aus doppelt wirkenden Kolben-Zylinder-Einheiten 10, 11. Jedem der Auflaufhörner 6, 7 ist je eine Kolben-Zylinder-Einheit 10, 11 zugeordnet. Die in entgegengesetzte Richtungen wirkenden Kolben-Zylinder-Einheiten 10, 11 sind als Differenzialzylinder ausgeführt, d.h. sie sind doppelt wirkend, ohne dass es zu ihrer Rückstellung einer Federkraft wie bei einfach wirkenden Zylindern bedarf. Auf diese Weise wird zum Verlagern der Kolben-Zylinder-Anordnungen eine geringere Verschiebekraft benötigt, da die Verlagerung des Kolbens nicht gegen eine Federkraft erfolgt.

Der Antrieb der Kolben-Zylinder-Einheiten 10, 11 kann mit dem Betriebsfluiddruck des Stromabnehmers 1 erfolgen.

Es ist zu erkennen, dass bei dieser Ausführungsform zwei unterschiedliche Breiten eingestellt werden können. Mit durchgezogener Linie ist eine ausgefahrene Betriebsstellung der Bügelanordnung 4 dargestellt. Mit unterbrochener Linie ist eine eingefahrene Betriebsstellung der Bügel dargestellt. Es ist zu erkennen, dass bei eingefahrener Betriebsstellung ein Kolben 12 entsprechend dem Hubweg des zugehörigen Auflaufhorns 6, 7 näher zur Mitte des Bügels 5 verlagert ist als in ausgefahrener Position. In nicht näher dargestellter Weise sind an den Kolben-Zylinder-Einheiten 10, 11 jeweils zwei Fluidanschlüsse vorgesehen, um einmal den bodenseitigen Raum der doppelt wirkenden Kolben-Zylinder-Einheit 10, 11 und zum anderen den von der Kolbenstange durchsetzten Ringraum, d.h. die Ringseite des Differenzialzylinders, mit Druck zu beaufschlagen, wenn eine Rückstellung der Bügelanordnung 5 in die eingefahrene Betriebsstellung gewünscht wird.

Figur 3 zeigt eine Ausführungsform, bei welcher die Auflaufhörner 6, 7 in insgesamt vier mit A bis D bezeichneten Betriebsstellungen verlagerbar sind. Dies wird dadurch erreicht, dass je Auflaufhorn 6, 7 zwei Kolben-Zylinder-Einheiten 10, 10a, 11, 11a in Reihenschaltung hintereinander geschaltet sind. Wenn keine der Kolben-Zylinder-Einheiten 10, 10a, 11, 11a betätigt wird, befinden sich die Auflaufhörner 6, 7 in der mit A bezeichneten Betriebsstellung. Werden nur die inneren Kolben-Zylinder-Einheiten 10, 11 betätigt, ergibt sich die Betriebsstellung B. Die Betriebsstellung C wird dann eingenommen, wenn lediglich die äußeren Kolben-Zylinder-Einheiten 10a, 11a betätigt werden. Wenn beide Kolben-Zylinder-Einheiten 10, 10a, 11, 11a gleichzeitig betätigt werden, ergibt sich die Betriebsstellung D.

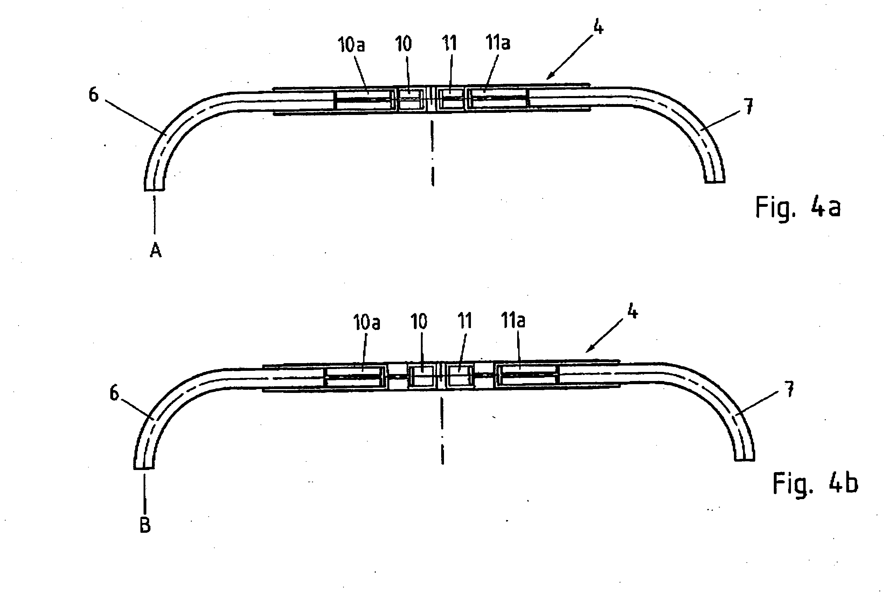

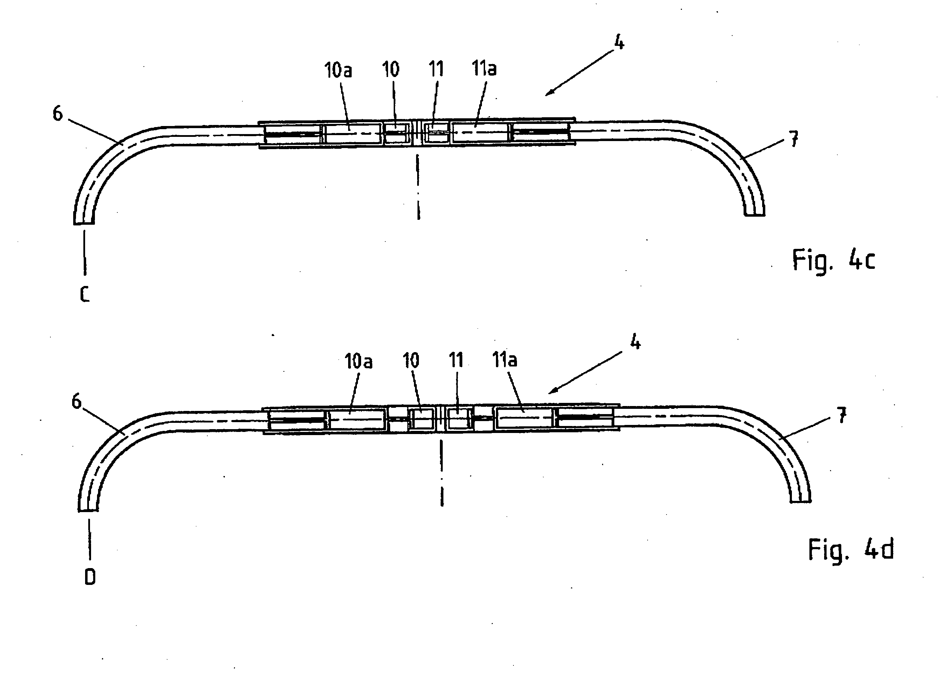

Die Figuren 4a bis 4d verdeutlichen noch einmal die möglichen Schaltungszustände, die in Figur 3 zusammengefasst sind. Figur 4a zeigt dementsprechend die komplett eingefahrene Betriebsstellung A. In Figur 4b sind lediglich die inneren Kolben-Zylinder-Einheiten 10, 11 betätigt worden. Der Hubweg dieser Kolben-Zylinder-Einheiten 10, 11 ist kürzer als der Hubweg der äußeren Kolben-Zylinder-Einheiten 10a, 11a, die erst in den Ausführungsformen gemäß Figuren 4c und 4d betätigt worden sind, und zwar einmal ohne Betätigung der inneren Kolben-Zylinder-Einheiten 10, 11 (Figur 4c), was zur Betriebsstellung C führt, wohingegen in Figur 4d schließlich beide Kolben-Zylinder-Einheiten 10, 10a, 11, 11a betätigt worden sind. Figur 4d zeigt dementsprechend die Betriebsstellung D.

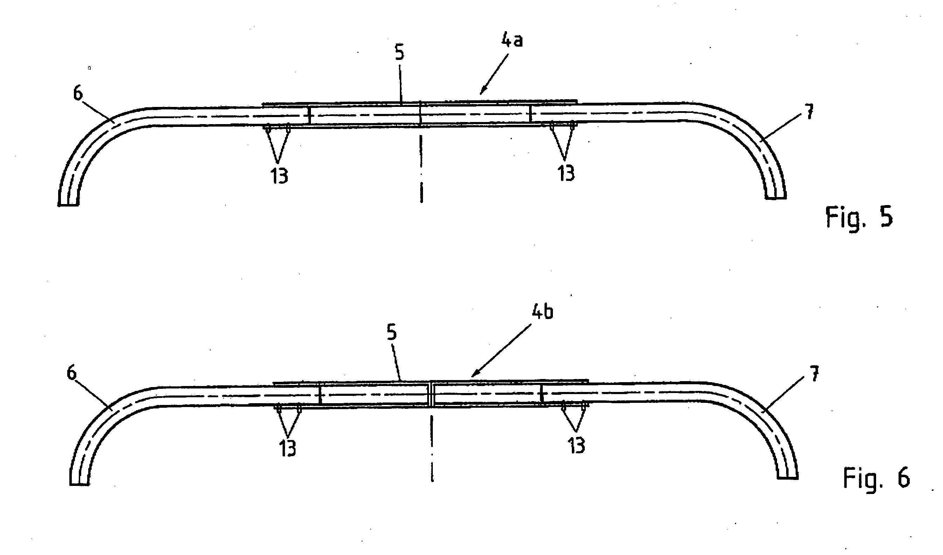

Figur 5 zeigt eine Bügelanordnung 4a, bei welcher auf die Darstellung der Stelleinrichtung verzichtet worden ist. Es ist zu erkennen, dass der mittige Bügel 5 durchgehend gestaltet ist. Das soll verdeutlichen, dass eine zentrale Stelleinrichtung vorgesehen sein kann, die gleichzeitig auf beide Auflaufhörner 6, 7 wirkt. Hierbei kann es sich beispielsweise um einen Gewindetrieb handeln. Es ist aber auch denkbar, eine zentrale Kolben-Zylinder-Einheit vorzusehen, die zwei Kolben besitzt, wobei der zentrale Raum zwischen den beiden Kolben zum Ausfahren der Auflaufhörner 6, 7 druckbeaufschlagt wird. Zum Einfahren der Auflaufhörner 6, 7 können die jeweiligen Ringräume der Kolben-Zylinder-Einheit druckbeaufschlagt werden.

Der Unterschied zu den vorherigen Ausführungsformen besteht aber insbesondere darin, dass Arretierungsmittel 13 vorgesehen sind, welche die Auflaufhörner 6, 7 in der gewünschten Position arretieren können. Die Arretierung kann in Form von Sicherungsstiften ausgebildet sein, die durch Fluiddruck oder Federspannung betätigt werden. Die Arretierung könnte auch elektrisch oder durch magnetische Kräfte erfolgen.

Die Ausführungsform der Figur 6 sieht ebenfalls solche Arretierungsmittel 13 vor. Der Unterschied zur Figur 5 ist, dass anstelle einer zentralen Stelleinrichtung in Anlehnung an die Ausführungsform der Figur 3 jedem Auflaufhorn 6, 7 jeweils wenigstens eine separate Stelleinrichtung zugeordnet ist. Die Trennlinie in der Mittelquerebene der Bügelanordnung 4b soll verdeutlichen, dass es wenigstens zwei Stelleinrichtungen gibt.

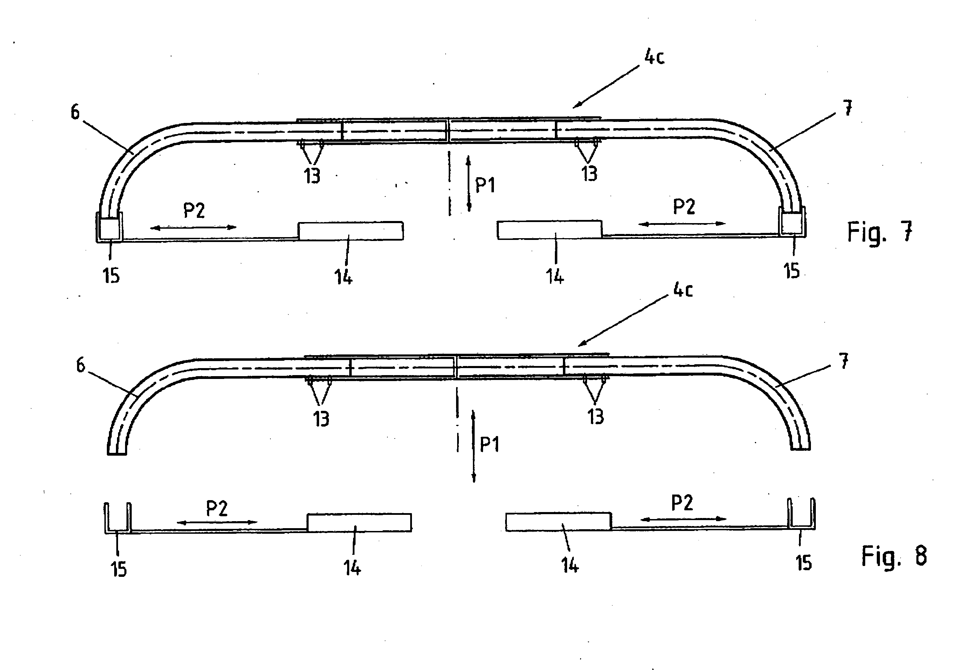

Die Ausführungsformen der Figuren 7 und 8 weisen sowohl die in den Figuren 5 und 6 dargestellten Arretierungsmittel auf als auch Stelleinrichtungen 14, die allerdings extern an der Bügelanordnung 4c angeordnet sind. Die dargestellten Stelleinrichtungen 14 besitzen jeweils ein Koppelmittel 15, hier in Form eines Greifers oder einer Tasche, in welche die unteren, freien Enden der Auflaufhörner 6, 7 einfassen können. Die Stelleinrichtungen 14 befinden sich an dem in Figur 1 dargestellten Grundrahmen 8 des Stromabnehmers 1, so dass die Auflaufhörner 6, 7 nur dann mit den Stelleinrichtungen 14 in Eingriff gelangen, wenn die Stromabnehmerwippe abgesenkt ist.

Diese Stelleinrichtung kann aber auch außerhalb des Stromabnehmers 1 z.B. am Fahrzeugdach angebracht werden. Letzteres hätte den wesentlichen Vorteil die Antriebseinheit der Stelleinrichtung 14 außerhalb des unter Hochspannung stehenden Stromabnehmerteils zu befestigen, so dass für die z.B. elektrische Antriebseinheit keine besonderen Hochspannungsisolierung erforderlich ist. Es wäre ein normaler elektrischer Antrieb mit Standardanforderungen einsetzbar.

Figur 8 zeigt, dass die Bügelanordnung 4c in der Höhe relativ zu den Stelleinrichtungen 14 verlagerbar ist. Der Pfeil P1 zeigt, dass die Bügelanordnung 4c in der Höhe gegenüber der ortsfesten Stelleinrichtung 14 verlagerbar ist. Die Pfeile P2 verdeutlichen, dass der Abstand zwischen den Koppelmitteln 15 entsprechend dem Abstand der Auflaufhörner 6, 7 veränderbar ist. Die Koppelmittel 15, die als auch Stelleingriff oder Greifer bezeichnet werden können, könnten auch noch senkrecht zu der Bewegungsrichtung P2 und P1 verschoben werden, so dass die Koppelmittel 15 nur dann mit den Auflaufhörnern 6 und 7 verbunden sind, wenn dieses explizit gefordert ist. So kann der Stromabnehmer 1 in normaler, abgesenkter Position der Stromabnehmerwippe ohne direkten Kontakt zu dem Koppelmittel 15 stehen. Das Koppelmittel kann auch aus elektrisch isoliertem Material gefertigt sein.

### Bezugszeichen:

- 1: - Stromabnehmer
- 2: - Stromabnehmerwippe
- 3: - Schleifleiste
- 4: - Bügelanordnung
- 4a: - Bügelanordnung
- 4b: - Bügelanordnung
- 4c: - Bügelanordnung
- 5: - Bügel
- 6: - Auflaufhorn
- 7: - Auflaufhorn
- 8: - Grundrahmen
- 9: - Stelleinrichtung
- 10: - Kolben-Zylinder-Einheit
- 10a: - Kolben-Zylinder-Einheit
- 11: - Kolben-Zylinder-Einheit
- 11a: - Kolben-Zylinder-Einheit
- 12: - Kolben
- 13: - Arretierungsmittel
- 14: - Stelleinrichtung
- 15: - Koppelmittel

- A-D: - Betriebsstellung
- P1: - Pfeil
- P2: - Pfeil

## Patentansprüche

1. Stromabnehmer für ein Schienenfahrzeug zur Kontaktierung mit einem Fahrdraht einer Oberleitung, umfassend eine in ihrer Breite veränderliche Stromabnehmerwippe (2) mit wenigstens einer Schleifleiste (3) und einer Bügelanordnung (4, 4a, 4b, 4c), umfassend einen Bügel (5) mit Auflaufhörnern (6, 7) an seinen Enden, wobei die Auflaufhörner (6, 7) mittels einer Stelleinrichtung (9, 14) in entgegengesetzte Richtungen und quer zur Fahrtrichtung verschiebbar sind, **dadurch gekennzeichnet, dass** die Stelleinrichtung (9, 14) von wenigstens einer als Differenzialkolben ausgeführten, doppelt wirkenden Kolben-Zylinder-Einheit (10, 10a, 11, 11a) oder einer elektromechanischen Antriebseinheit gebildet ist, wobei die Stelleinrichtung (14) außerhalb der Bügelanordnung (4c) angeordnet ist und nur dann mit den Auflaufhörnern (6, 7) in einen Wirkzusammenhang bringbar ist, wenn der Stromabnehmer (1) abgesenkt ist.

2. Stromabnehmer nach Anspruch 1, **dadurch gekennzeichnet, dass** jedem Auflaufhorn (6, 7) jeweils eine eigene Kolben-Zylinder-Einheit (10, 10a, 11, 11a), eine elektromechanische Antriebseinheit oder ein fluiddruckbetriebener Motor zugeordnet ist.

3. Stromabnehmer nach Anspruch 1 oder 2, **dadurch gekennzeichnet, dass** die Verstellung der Auflaufhörner (6, 7) mittels einer beiden Auflaufhörnern (6, 7) gemeinsamen Stelleinrichtung erfolgt.

4. Stromabnehmer nach Anspruch 3, **dadurch gekennzeichnet, dass** die Stelleinrichtung als Gewindetrieb ausgeführt ist, umfassend eine angetriebene Gewindespindel sowie den Auflaufhörnern (6, 7) zugeordnete Spindelmuttern.

5. Stromabnehmer nach einem der Ansprüche 1 bis 3, **dadurch gekennzeichnet, dass** zur Vergrößerung oder Differenzierung des Hubweges der Auflaufhörner (6, 7) mehrere Kolben-Zylinder-Einheiten (10, 10a, 11, 11a) in einer Reihenschaltung angeordnet sind.

6. Stromabnehmer nach Anspruch 5, **dadurch gekennzeichnet, dass** die Hubewege von in Reihe geschalteten Kolben-Zylinder-Einheiten (10, 10a, 11, 11a) unterschiedlich sind.

7. Stromabnehmer nach einem der Ansprüche 1 bis 6, **dadurch gekennzeichnet, dass** Arretierungsmittel (13) vorgesehen sind, mittels welcher die Auflaufhörner (6, 7) in einer ausgefahrenen und/oder einer eingefahrenen Betriebsstellung (A-D) gegenüber dem Bügel (5) festsetzbar sind.

8. Stromabnehmer nach Anspruch 7, **dadurch gekennzeichnet, dass** die Arretierungsmittel (13) elektrisch, magnetisch, durch Federkraft oder fluidisch betätigbar sind.

9. Stromabnehmer nach Anspruch 7 oder 8, **dadurch gekennzeichnet, dass** die Kolben-Zylinder-Einheit (10, 10a, 11, 11a) bei in einer ausgefahrenen und/oder eingefahrenen Betriebsstellung (A-D) festgesetzten Auflaufhörnern (6, 7) druckfrei geschaltet ist.

10. Stromabnehmer nach Anspruch 1, **dadurch gekennzeichnet, dass** die Stelleinrichtung (14) Koppelmittel (15) zur lösbaren Kopplung mit den Auflaufhörnern (6, 7) besitzt, um diese quer zur Fahrtrichtung zu verlagern.

11. Stromabnehmer nach Anspruch 1 oder 10, **dadurch gekennzeichnet, dass** der Wirkeingriff durch Absenken der Stromabnehmerwippe (2) und/oder durch Verlagerung von Koppelmitteln (15) der Stelleinrichtung (14) erfolgt.

12. Stromabnehmer nach Anspruch 11, **dadurch gekennzeichnet, dass** die Koppelmittel (15) aus einer von der Hubrichtung der Stromabnehmerwippe (2) und der Stellrichtung der Auflaufhörner (6, 7) aufgespannten Querebene heraus verlagerbar sind und nur zum Eingriff mit den Auflaufhörnern (6, 7)in dieses Querebene verlagert werden.

13. Stromabnehmer nach Anspruch 1 oder einem der Ansprüche 10 bis 12, **dadurch gekennzeichnet, dass** das Koppelmittel (15) und/oder die Stelleinrichtung (14) elektrische gegenüber dem Stromabnehmer (1) isoliert ist.

## Claims

1. Pantograph for a rail vehicle for making contact with a contact wire of an overhead line, comprising a pantograph head (2) of variable width having at least one contact strip (3) and a bracket arrangement (4, 4a, 4b, 4c), comprising a bracket (5) with horns (6, 7) at its ends, the horns (6, 7) being movable by means of an adjusting device (9, 14) in opposite directions and at right-angles to the direction of travel, **characterised in that** the adjusting device (9, 14) is formed by at least one double-acting piston-cylinder unit (10, 10a, 11, 11a) embodied as a differential piston, or an electromechanical drive unit, the adjusting device (14) being arranged outside the bracket arrangement (4c) and being capable of being brought into an operational relationship with the horns (6, 7) only when the pantograph (1) has been lowered.

2. Pantograph according to claim 1, **characterised in that** each horn (6, 7) is associated with its own piston-cylinder unit (10, 10a, 11, 11a), an electromechanical drive unit or a motoroperated by fluid pressure.

3. Pantograph according to claim 1 or 2, **characterised in that** the adjustment of the horns (6, 7) is carried out by means of an adjusting device common to both horns (6, 7).

4. Pantograph according to claim 3, **characterised in that** the adjusting device is embodied as a threaded drive comprising a driven threaded spindle and spindle nuts associated with the horns (6, 7).

5. Pantograph according to one of claims 1 to 3, **characterised in that** for increasing or differentiating the length of stroke of the horns (6, 7) a plurality of piston-cylinder units (10, 10a, 11, 11a) are connected in series.

6. Pantograph according to claim 5, **characterised in that** the lengths of stroke of piston-cylinder units (10, 10a, 11, 11a) connected in series are different.

7. Pantograph according to one of claims 1 to 6, **characterised in that** locking means (13) are provided, by means of which the horns (6, 7) can be secured in an extended and/or retracted operational position (A-D) relative to the bracket (5).

8. Pantograph according to claim 7, **characterised in that** the locking means (13) can be operated electrically, magnetically, by spring force or fluidically.

9. Pantograph according to claim 7 or 8, **characterised in that** the piston-cylinder unit (10, 10a, 11, 11a) is switched to pressurelessoperation when the horns (6, 7) are secured in an extended and/or retracted operational position (A-D).

10. Pantograph according to claim 1, **characterised in that** the adjusting device (14) has coupling means (15) for releasably coupling to the horns (6, 7) in order to displace said horns transversely of the direction of travel.

11. Pantograph according to claim 1 or 10, **characterised in that** operational engagement is obtained by lowering the pantograph head (2) and/or by displacing coupling means (15) of the adjusting device (14).

12. Pantograph according to claim 11, **characterised in that** the coupling means (15) can be displaced out of a transverse plane spanned by the direction of the stroke of the pantograph head (2) and the direction of adjustment of the horns (6, 7) and are displaced into this transverse plane only for engagement with the horns (6, 7).

13. Pantograph according to claim 1 or one of claims 10 to 12, **characterised in that** the coupling means (15) and/or the adjusting device (14) is or are electrically insulated from the pantograph (1).

## Revendications

1. Pantographe pour un véhicule de chemin de fer pour venir en contact avec un fil de contact d'une ligne aérienne, comprenant un archet de pantographe (2) variable en largeur avec au moins une bande de frottement (3) et un ensemble d'étrier (4, 4a, 4b, 4c), comprenant un étrier (5) avec des cornes de pantographe (6, 7) à ses extrémités, les cornes de pantographe (6, 7) pouvant être déplacées à l'aide d'un dispositif de réglage (9, 14) dans des directions opposées et transversalement à la direction de déplacement, **caractérisé en ce que** le dispositif de réglage (9, 14) est formé par au moins une unité de piston/cylindre à double effet (10, 10a, 11, 11a) réalisée en tant que piston différentiel ou une unité de commande électromécanique, le dispositif de réglage (14) étant disposé en dehors de l'ensemble d'étrier (4c) et pouvant seulement être mis en rapport opératif avec les cornes de pantographe (6, 7) lorsque le pantographe (1) est abaissé.

2. Pantographe selon la revendication 1, **caractérisé en ce que** l'on associe à chaque corne de pantographe (6, 7) respectivement une unité de piston/cylindre dédiée (10, 10a, 11, 11a), un dispositif de commande électromécanique ou un moteur fonctionnant par pression de fluide.

3. Pantographe selon la revendication 1 ou 2, **caractérisé en ce que** le réglage des cornes de pantographe (6, 7) s'effectue à l'aide d'un dispositif de réglage commun aux deux cornes de pantographe (6, 7).

4. Pantographe selon la revendication 3, **caractérisé en ce que** le dispositif de réglage est réalisé en tant que mécanisme à vis comprenant une broche filetée entraînée ainsi que des écrous de broche associés aux cornes de pantographe (6, 7).

5. Pantographe selon l'une des revendications 1 à 3, **caractérisé en ce que**, pour l'augmentation ou la différenciation de la course d'élévation des cornes de pantographe (6, 7), plusieurs unités de piston/cylindre (10, 10a, 11, 11a) sont disposées selon un montage en série.

6. Pantographe selon la revendication 5, **caractérisé en ce que** les courses d'élévation d'unités de piston/cylindre (10, 10a, 11, 11a) montées en série sont différentes.

7. Pantographe selon l'une des revendications 1 à 6, **caractérisé en ce que** des moyens d'arrêt (13) sont prévus, grâce auxquels il est possible de fixer les cornes de pantographe (6, 7) dans une position de fonctionnement (A-D) sortie et/ou rentrée par rapport à l'étrier (5).

8. Pantographe selon la revendication 7, **caractérisé en ce que** les moyens d'arrêt (13) peuvent être actionnés électriquement, magnétiquement, grâce à une force élastique ou de manière fluidique.

9. Pantographe selon la revendication 7 ou 8, **caractérisé en ce que** l'unité de piston/cylindre (10, 10a, 11, 11a) est mise hors pression en cas de cornes de pantographe (6, 7) fixées dans une position de fonctionnement (A-D) sortie et/ou rentrée.

10. Pantographe selon la revendication 1, **caractérisé en ce que** le dispositif de réglage (14) possède des moyens de couplage (15) pour le couplage détachable avec les cornes de pantographe (6, 7), afin de déplacer celles-ci transversalement au sens de circulation.

11. Pantographe selon la revendication 1 ou 10, **caractérisé en ce que** la mise en prise active s'effectue en abaissant l'archet de pantographe (2) et/ou en déplaçant des moyens de couplage (15) du dispositif de réglage (14).

12. Pantographe selon la revendication 11, **caractérisé en ce que** les moyens de couplage (15) peuvent être déplacés hors d'un plan transversal formé par le sens d'élévation de l'archet de pantographe (2) et le dispositif de réglage des cornes de pantographe (6, 7) et sont seulement déplacés dans ce plan transversal pour la mise en prise avec les cornes de pantographe (6, 7) .

13. Pantographe selon la revendication 1 ou l'une des revendications 10 à 12, **caractérisé en ce que** le moyen de couplage (15) et/ou le dispositif de réglage (14) est/sont isolé(s) électriquement par rapport au pantographe (1).
